# EUROPÄISCHE PATENTANMELDUNG

(11) **EP 1 075 887 A1**
(43) Veröffentlichungstag der Anmeldung: **14.02.2001**
(21) Anmeldenummer: 99115654.8
(22) Anmeldetag: 07.08.1999
(51) Int. Cl.: B23B 29/04, B23B 31/26

(54) **Spannvorichtung für Werkstückträger**

(71) Anmelder: System 3R International AB, 162 50 Vällingby (SE)
(72) Erfinder: Nordquist, Hakon, 18775 Täby (SE)
(74) Vertreter: Zinngrebe, Horst, Dr.rer.nat.

(57) **Zusammenfassung**

Beschrieben wird eine am Spindelkopf (1) einer Werkzeugmaschine vorgesehene Kupplung zum Anspannen eines insbesondere plattenförmigen Werkstückträgers (2), beispielsweise einer Palette, in einer vorgegebenen repetierbaren und präzisen Lage bezüglich eines räumlichen Referenzsystems (12,14,16,18,17), wobei der Spindelkopf (1) eine axial und quer zu seiner Stirnfläche bewegliche Spannzange (3) aufweist. Zur Erhöhung der Genauigkeit der Werkstückbearbeitung ist eine mit der Stirnfläche zu verbindende, auf der Vorderseite mit räumlichen Referenzen versehene Platte (10) mit zentraler Durchgangsöffnung (15) für die Aufnahme eines mit der Rückseite des Wekstückträgers verbundenen Zugankers (4) sowie ein Bolzen (20) vorgesehen, dessen vorderes Ende mit dem Zuganker koppelbar und dessen hinteres Ende mit der Spannzange (3) verbindbar ist.

## Beschreibung

Die Erfindung betrifft eine am Spindelkopf einer Werkzeugmaschine vorgesehene Kupplung zum Anspannen eines insbesondere plattenförmigen Werkstückträgers, beispielsweise einer Palette, in einer vorgegebenen, repetierbaren und präzisen Lage bezüglich eines räumlichen Referenzsystems, wobei der Spindelkopf eine axial und quer zu seiner Stirnfläche bewegliche Spannzange aufweist.

Die Spannzange dient gewöhlich zum Ergreifen eines von einem Drehautomaten, einer Fräsmaschine oder dergleichen zu bearbeitenden Werkstücks, welches von der Spannzange beispielsweise in einen am Spindelkopf vorgesehenen Innenkonus zu seiner Positionierung angezogen wird. Für die nummerische Steuerung eines Drehautomaten bildet der Innenkonus jedoch keine ausreichend genaue Referenz, sodaß eine hinreichend exakte, gleichartige und automatische Bearbeitung einer großen Zahl von nacheinander zu bearbeitenden Werkstücken schwierig ist.

Der Erfindung liegt daher die Aufgabe zugrunde, die Genauigkeit der Werkstückbearbeitung in einer eingangs genannten Werkzeugmaschine zu erhöhen.

Dazu ist bei der eingangs genannten Kupplung erfindungsgemäß eine mit der Stirnfläche zu verbindende, auf der Vorderseite mit räumlichen Referenzen versehene Platte mit zentraler Durchgangsöffnung für die Aufnahme eines mit der Rückseite des Werkstückträgers verbundenen Zugankers sowie ein Bolzen vorgesehen, dessen hinteres Ende mit der Spannzange verbindbar und dessen vorderes Ende mit dem Zuganker koppelbar ist. Die erfindungsgemäße Kupplung führt zu einer wesentlich größeren Genauigkeit der automatischen, nummerisch gesteuerten Bearbeitung der Werkstücke, ist auf die Verwendung eines bestimmten Spannsystems nicht beschränkt und gestattet schließlich dem Benutzer den einfachen Übergang auf bekannte Kupplungen beispielsweise nach der ISO-Norm durch Abnehmen der Platte und des Bolzens für den Fall, daß noch Bearbeitungsaufgaben zu lösen sind, deren Genauigkeit ein Arbeiten mit Kupplungen nach der ISO-Norm erlaubt.

In bevorzugter Ausgestaltung der Erfindung kann der Bolzen in der Platte axial geführt sein. Ferner empfiehlt es sich, am vorderen Ende des Bolzens ein mit einem Profil am Zuganker zusammenwirkendes Kugelgesperre vorzusehen. Für die Verbindung des hinteren Endes des Bolzens mit der Spannzange ist es empfehlenswert, entweder das Ende mit der Spannzange zu verschrauben oder das Ende über einen in ein Bolzenprofil eingreifenden Kugelkranz mit der Spannzange zu koppeln. Eine gute Führung des Bolzens während der Spannzangenbewegungen wird erreicht, wenn vorteilhafterweise an der Rückseite der Platte ein Hohlkonus befestigt ist, in dessen axialer Durchgangsbohrung der Bolzen geführt ist. Weiterhin empfiehlt es sich, zur Erhöhung der Spannkraft wenigstens eine sich an der Platte abstützende und gegen den Bolzen anliegende, axial wirkende Feder vorzusehen.

Weitere bevorzugte Ausgestaltungen der Erfindung sind in den Unteransprüchen angegeben.

Die Erfindung wird nachstehend an dem in der beigefügten Zeichnung dargestellten Ausführungsbeispiel im einzelnen erläutert, bei welchem als räumliches Referenzsystem ein x-, y-, z-Orthogonalsystem verwendet ist.. Es zeigen:
Figur 1 einen schematischen Axialschnitt durch die erfindungsgemäße Kupplung mit angespanntem Werkstückträger sowie mit strichpunktiert angedeuteter alternativer Möglichkeit einer Kopplung zwischen Bolzen und Spannzange, und
Figur 2 eine der Figur 1 ähnliche Darstellung mit vom Spindelkopf gelöstem Werstückträger.

Der Spindelkopf 1 einer automatischen, im weiteren nicht dargestellten Fräs-, Schleif-, Dreh-, oder dergleichen Werkzeugmaschine besitzt eine zentrale Drehachse 8, eine sich zur Achse 8 senkrecht erstreckende freie Stirnfläche 5 und einen zentralen sich zur Strinfläche 5 öffnenden Innenkonus 9. Im Spindelkopf 1 ist eine axial bewegliche Spannzange 3 rückseitig mit einem ebenfalls nicht gezeigten Steuermechanismus gekoppelt, der bei anstehendem Werkstückwechsel die Spannzange 3 zum Freigeben eines bisher benutzten und Ergreifen eines neuen Werkstücks in Richtung auf die Stirnfläche 5 längs der Achse 8 vorfahren und nach erfolgtem Ergreifen wieder in die dargestellte Position zurückfahren läßt. Dabei können das vordere Ende der Spannzange 3 sowie die Form des Innenkonus 9 nach einer der ISO-Normen ausgelegt sein.

Um ohne tiefgreifenden Umbau des Spindelkopfes 1 diesen für das Anspannen eines Werkstücks in einer exakten Position bezüglich eines x-, y-, z-Orthogonalsystems geeignet zu machen ist zunächst ein schlanker und im wesentlichen zylindrischer Bolzen 30 mit einem Außendurchmesser vorgesehen, der demjenigen der Spannzange 3 praktisch gleich ist. Das hintere radial verjüngte Ende 31 des Bolzens 30 ist mit einem Außengewinde versehen und in ein in die Spannzange 3 eingedrehtes Innengewinde eingeschraubt. Damit stellt sich der Bolzen 30 als eine axiale Verlängerung der Spannzange 3 in den vom Innenkonus 9 umschlossenen Hohlraum dar und nimmt daher an allen Bewegungen der Spannzange 3 teil.

Am vorderen Ende 33 trägt der Bolzen 30 ein Kugelgesperre aus mehreren um seinen Umfang gleich verteilten Kugeln, von denen zwei mit 32 und 34 bezeichnet sind. Durch eine axiale Ausdrehung 38 am vorderen Ende 33 bleibt am Bolzen 30 eine Ringwand, in deren radialen Durchbohrungen die Kugeln des Kugelgesperres beschränkt radial beweglich eingefangen sind, wie noch erläutert wird. In den Boden der Ausdrehung 38 ist mittig ein axialer Bolzenkanal 66 eingebracht, der mittels eines Stopfens 36 mit über den Boden sich erhebendem Kopf 37 verschlossen ist, auf den ebenfalls noch eingegangen wird.

Weiterhin ist eine Platte 10 mittels Schrauben 21 an der freien Strinfläche 5 verbolzt, trägt auf ihrer Vorderseite x-y-Referenzen 12, 14, 16, 18 sowie wenigstens eine z-Referenz 17 und weist eine zentrale Durchgangsöffnung 15 auf, deren Mittellinie in der Achse 8 liegt und die an ihrem rückwärtigen Ende eine radiale Erweiterung unter Ausbildung einer radialen Ringschulter 19 besitzt. An der Rückseite der Platte 10 ist ein Hohlkonus 20 durch Schrauben 26 befestigt, dessen zentrale Öffnung 22 auf die Achse 8 ausgerichtet ist und den Bolzen 30 axial führend umfaßt. Die konische Außenkontur des Hohlkonus 20 ist an die Steigung des Innenkonus 9 angepaßt, sodaß bei an dem Spindelkopf 1 befestigter Platte 10 der Hohlkonus 20 fest im Innenkonus 9 sitzt.

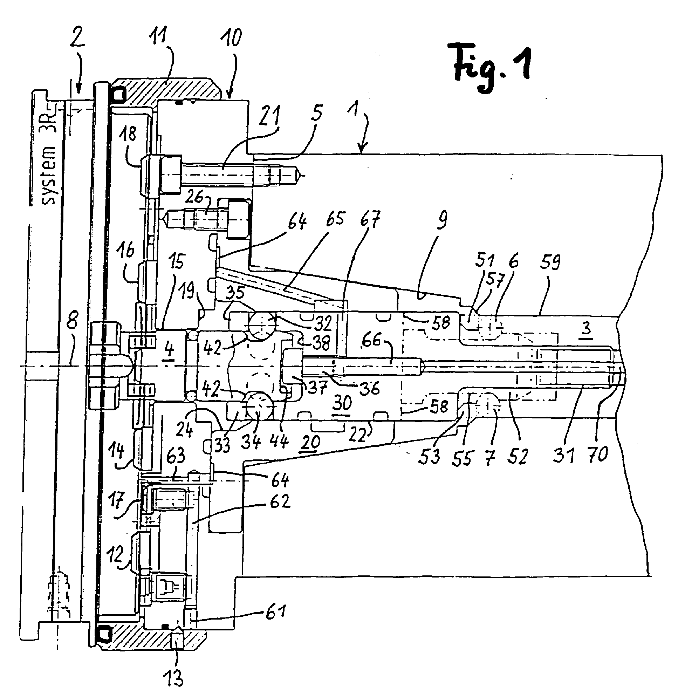

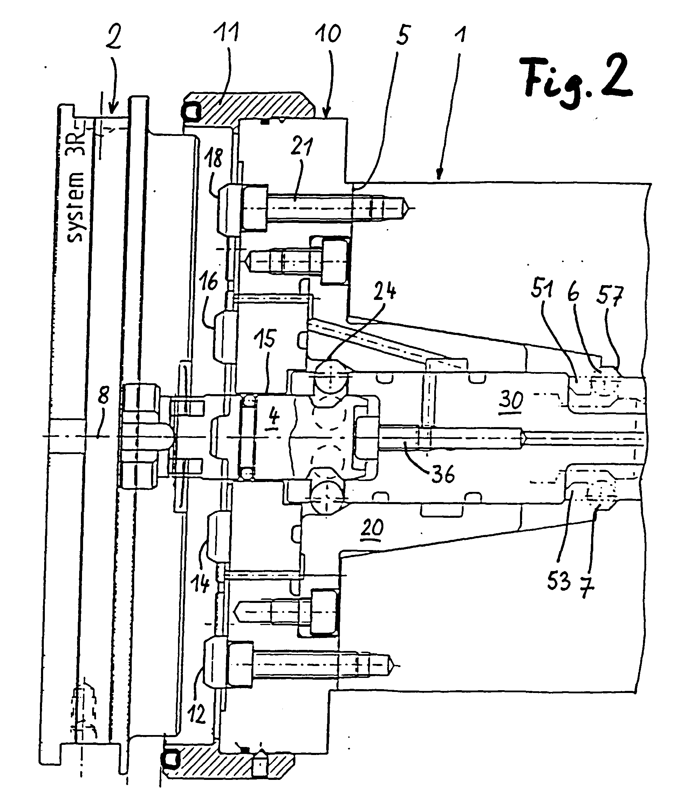

Die Öffnung 22 weist in der Nähe der Platte 10 eine radiale Aufweitung 24 mit einer nach radial außen weisenden Rampe auf, in welche die Kugeln des Kugelgesperres radial ausweichen können, wenn der Bolzen 30 hinreichend weit sich nach vorne auf die Platte 10 zu bewegt, und dann nicht mehr in den Innenraum der Ausdrehung 38 vorstehen (Figur 2). In einer zurückgezogenen Stellung des Bolzens gemäß Figur 1 drängt die Innenwand der Öffnung 22 die Kugeln dagegen soweit radial einwärts, daß ihre Kalotten in den Innenraum der Ausdrehung 38 vorstehen und dort eine wirksame Kupplung mit einem Zuganker 4 bilden können.

Zu erwähnen ist noch ein Ring 11, der mittels Elementen 13 an der Außenperipherie der Platte 10 befestigt ist und über deren Vorderseite, insbesondere über die x-y-Referenzen 12, 14, 16, 18 axial vorsteht.

Der Zuganker 4 ist in einer hier nicht näher erläuterten Weise an der Rückseite eines Werkstückträgers 2 mittig befestigt und steht aus dieser axial vor. Der Werkstückträger 2 kann eine Palette sein, auf deren Vorderseite ein oder mehrere nicht dargestellte Werkstücke gehalten sein können. Der im wesentlichen zylindrische Zuganker 4 paßt axial beweglich in die Durchgangsbohrung 15 der Platte 10. In der Nähe seines freien Endes ist der Zuganker 4 mit einer ringförmigen, radialen und der Form der erwähnten Kugelkalotten angepaßten Einsenkung 42 versehen und besitzt an seiner freien Stirnfläche eine mittige Eindrehung 44.

Zum Anspannen der Palette 2 an den Spindelkopf 1 wird zunächst die Spannzange 3 von dem erwähnten Steuermechanismus nach vorne gefahren, sodaß die Stirnfläche 35 des Bolzens 30 vor die Ringschulter 19 gelangt (Figur 2). Jetzt wird die Palette 2 so auf die Vorderseite der Platte 10 zu bewegt, daß der Zuganker 4 durch die Durchgangsöffnung 15 hindurch mit seinem vorderen Ende in die Ausdrehung 38 eintaucht und der Boden der Eindrehung 44 schließlich gegen den Kopf 37 anliegt. Dabei dringt die Rückseite der Palette 2 in den vom Ring 11 und der Vorderseite der Platte 10 umschlossenen Raum ein, wobei nicht dargestellte Profile vorgesehen sind, die das Einfügen der Palette 2 nur in einer von beispielsweise vier vorgegebenen Drehrichtungen bezüglich der Achse 8 erlauben.

Aus dieser das Anspannen vorbereitenden Position der Palette 2 gemäß Figur 2 erfolgt das Anspannen selbst durch Rückziehen der Spannzange 3. Dabei werden die Kugeln 32, 34 (und die weiteren Kugeln) des Kugelgesperres durch die Rampe der Erweiterung 24 radial einwärts gedrängt, sodaß ihre Kalotten in die Einsenkung 42 eingreifen und dadurch den Zuganker 4 an den Bolzen 30 koppeln. Daher folgt der Zuganker 4 und damit die Palette 2 der Rückwärtsbewegung des Bolzens 30. Die Rückziehbewegung und damit das Anspannen der Palette 2 sind abgeschlossen, wenn eine (von mehreren) an der Palettenrückseite ausgebildete z-Gegenreferenz zur Anlage an die auf der Vorderseite der Platte 10 befindliche z-Referenz 17 gelangt. Die x-y-Referenzen 12, 14, 16, 18 stehen dann in Eingriff mit an der Palettenrückseite vorgesehenen x-y-Gegenreferenzen.

Zwecks Erhöhung der Spannkraft können nicht dargestellte, um die Durchgangsöffnung 15 herum gleichverteilt angeordnete Druckfedern vorgesehen sein, von denen sich jede auf der Ringschulter 19 abstützt und gegen die Stirnfläche 35 anliegt.

Ferner sind die Platte 10, der Hohlkonus 20 und der Bolzen 30 von miteinander kommunizierenden Druckluftkanälen durchzogen, die über einen in die Außenperipherie der Platte 10 bzw. des Ringes 11 mündenden Radialkanal 62 an eine externe gesteuerte Druckluftquelle angeschlossen werden können. In vielen Fällen werden die Druckluftkanäle von der Maschine, an der der Spindelkopf 1 befestigt ist, durch einen die Spannzange mittig durchsetzenden und mit dem Bolzenkanal 66 fluchtenden Axialkanal 70 mit Druckluft versorgt, wobei dann der Radialkanal 62 durch einen Stopfen 61 an der Außenperipherie verschlossen ist. Die Druckluftkanäle dienen dazu, die z-Referenz 17 von Fremdpartikeln freizuhalten.

Dazu öffnet sich der Radialkanal 62 in der Platte 10 über einen Stichkanal 63 zur z-Referenz 17. An seinem inneren Ende mündet der Radialkanal 62 in einen zwischen der Rückseite der Platte 10 und der Vorderseite des Hohlkonus 20 ausgebildeten Ringkanal 64, der seinerseits über einen weiteren Stichkanal 65 im Hohlkonus 20 und einer Radialbohrung 67 im Bolzen 30 mit dem Bolzenkanal 66 in Verbindung steht.

In einer in den Figuren strichpunktiert dargestellten alternativen Ausführungsform kann der Bolzen 30 über einen am Ende der Spannzange 3 vorhandenen Kugelkranz mit den Kugeln 6 und 7 mit der Spannzange 3 gekoppelt werden, der einen Unterschied zwischen dem vorhandenen Hub der Spannzange 3 zu dem kleineren, für den Bolzen 30 nur erforderlichen Hub ausgleichen kann. Dazu besitzt die Spannzange 3 an ihrem vorderen Ende mehrere axial vorstehende und in Umfangsrichtung gleich beabstandete Finger 51, 53, in welchen Kugeln 6 und 7 radial beschränkt beweglich eingefangen sind. Zwischen einem verdickten hinteren Ende 52 des Bolzens 30 und einer radialen Anschlagschulter 58 des Bolzens 30 befindet sich ein radial verjüngter und sich axial erstreckender Bolzenabschnitt 55, längs welchem die Kugeln 6, 7 axial laufen können. Die Innenwand 59 der Spannzangenführung im Spindelkopf 1 drückt die Kalotten der Kugeln 6, 7 auf den Bolzenabschnitt 55, sodaß der Bolzen bei einer Rückwärtsbewegung der Spannzange 3 von dieser mitgenommen wird. Der Vorwärtshub des Bolzens wird durch Anlage der Finger 51, 53 an die Anschlagschulter 58 des Bolzens 30 bewirkt, die zur Überwindung des genannten Unterschieds entsprechend weit nach vorne versetzt sein kann, sodaß ein Anfangsteil des Spannzangen-Vorwärts- und - Rückwärtshubes für den Bolzen 30 wirkungslos bleibt.

Das Entkoppeln des Bolzens 30 von der Spannzange 3 wird durch eine radiale Ausweitung 57 der Innenwand 59 der Spannzangenführung möglich, in welche die Kugeln 6, 7 radial ausweichen und damit den Bolzen 30 freigeben können.

## Patentansprüche

1. Am Spindelkopf (1) einer Werkzeugmaschine vorgesehene Kupplung zum Anspannen eines insbesondere plattenförmigen Werkstückträgers (2), beispielsweise einer Palette, in einer vorgegebenen, repetierbaren und präzisen Lage bezüglich eines räumlichen Referenzsystems, wobei der Spindelkopf (1) eine axial und quer zu seiner Stirnfläche (5) bewegliche Spannzange (3) aufweist, gekennzeichnet durch eine mit der Stirnfläche (5) zu verbindende, auf der Vorderseite mit räumlichen Referenzen (12, 14, 16, 18) versehene Platte (10) mit zentraler Durchgangsöffnung (15) für die Aufnahme eines mit der Rückseite des Werkstückträgers (2) verbundenen Zugankers (4) sowie durch einen Bolzen (30), dessen vorderes Ende mit dem Zuganker (4) koppelbar und dessen hinteres Ende mit der Spannzange (3) verbindbar ist.

2. Kupplung nach Anspruch 1, dadurch gekennzeichnet, daß der Bolzen (30) in der Platte (10) axial geführt ist.

3. Kupplung nach Anspruch 1 oder 2, dadurch gekennzeichnet, daß der Bolzen an seinem vorderen Ende ein mit einem Profil (42) am Zuganker (4) zusammenwirkendes Kugelgesperre (32, 34) trägt.

4. Kupplung nach einem der vorstehenden Ansprüche, dadurch gekennzeichnet, daß der Bolzen an seinem hinteren Ende mit der Spannzange (3) verschraubt ist.

5. Kupplung nach einem der Ansprüche 1 bis 3, dadurch gekennzeichnet, daß der Bolzen an seinem hinteren Ende über einen in ein Bolzenprofil (52, 55) eingreifenden Kugelkranz (6, 7) mit der Spannzange (3) gekoppelt ist.

6. Kupplung nach einem der vorstehenden Ansprüche, dadurch gekennzeichnet, daß an der Rückseite der Platte (10) ein Hohlkonus (20) befestigt ist, in dessen axialer Durchgangsbohrung (22) der Bolzen (30) geführt ist.

7. Kupplung nach einem der Ansprüche 5 oder 6, dadurch gekennzeichnet, daß der Bolzen in der Nähe seines hinteren Endes eine radiale Anschlagschulter (58) als Anlage für die Spannzange (3) aufweist.

8. Kupplung nach einem der vorstehenden Ansprüche, dadurch gekennzeichnet, daß der Bolzen (30) und die Platte (10) sowie gegebenenfalls der Hohlkonus (20) kommunizierende Druckmediumkanäle (62, 63, 64 65, 67, 66) aufweisen, die in z-Referenzen (17) münden.

9. Kupplung nach einem der vorstehenden Ansprüche, dadurch gekennzeichnet, daß wenigstens eine die Spannkraft erhöhende Druckfeder vorgesehen ist, die sich auf der Platte (10) abstützt und gegen den Bolzen (30) anliegt.
